# EUROPEAN PATENT APPLICATION

(11) **EP 1 920 991 A1**
(43) Date of publication of application: **14.05.2008**
(21) Application number: 06781136.4
(22) Date of filing: 10.07.2006
(51) Int. Cl.: B62D 5/04

(54) **ELECTRIC POWER STEERING DEVICE**

(30) Priority: 11.07.2005 JP 2005201267; 21.11.2005 JP 2005335126; 14.12.2005 JP 2005360112
(71) Applicant: NSK Ltd., Tokyo 141-8560 (JP)
(72) Inventor: KASHIMOTO, Keiji, c/o NSK Ltd., Maebashi-shi, Gunma 3718527 (JP); SHINGOU, Masanori, c/o NSK Ltd., Maebashi-shi, Gunma 3718527 (JP); KAWADA, Hideaki, c/o NSK Ltd., Maebashi-shi, Gunma 3718527 (JP); SHINOHARA, Shigeo, c/o NSK Ltd., Maebashi-shi, Gunma 3718528 (JP); SATOH, Kouichi, c/o NSK Ltd., Maebashi-shi, Gunma 3718527 (JP)
(74) Representative: HOFFMANN EITLE
(86) International application number: PCT/JP2006/314111
(87) International publication number: WO 2007/007880

(57) **Abstract**

An electric power steering device which has, on the outer surface of its gear box, the circuit modules of a control device such as a power module, a frame module, and a control module, and which is easily mountable on a vehicle and less affected by heating. The upper half of the gear box (11) is formed in a rectangular parallelepiped box (11b) in which a reduction gear mechanism is assembled. The first flat face (11b1) of the gear box (11) on the outside of the axis of the center shaft of an electric motor (12) as viewed from a worm gear meshing point is formed as a mounting face for the power module (PM), and the second flat face (11b2) of the gear box crossing the first flat face is formed as a mounting face for circuit parts forming the frame module (FM) and the control module (CM).

## Description

### TECHNICAL FIELD

The present invention relates to an electric power steering device for vehicle. It particularly relates to an arrangement and structure for integrally mounting circuit board modules to a mechanical portion of an electric power steering device, the circuit board modules making up an electric circuit device for steering assist control and assist force generation.

### BACKGROUND ART

A common electric power steering device for vehicle will be described below. In the steering shaft connected between the steering wheel of a vehicle and the pinion shaft included in the rack and pinion steering mechanism of the vehicle, a rotary torque (hereinafter referred to as the "steering torque") attributable to steering input and output is generated. A torque detection device is provided on the steering shaft to detect the steering torque. Based on the detected steering torque information and vehicle speed information obtained from the vehicle, a varying requirement of steering assist force is calculated. Based on the calculation, the current supply to the electric motor of the electric power steering device is adjusted to generate a required steering assist force. The generated steering assist force is transmitted to the steering shaft via a reduction gear mechanism to appropriately assist the driver in operating the steering wheel.

A control drive circuit device for an electric power steering device like the above-described requires plural electric circuits such as a signal processing electric circuit included in a torque detection device to detect the steering torque, a control electric circuit included in a control drive circuit device to output a pulse-width-modulated (PWM) rectangular wave drive signal based on the duty ratio determined by calculating, based on the detected amount of steering torque, the electric motor driving current, and a drive electric circuit included in the control drive circuit device to, responding to the PWM rectangular wave drive signal from the control electric circuit, rectifyingly and switchingly drive plural power transistors included in a bridge circuit. The electric circuits can be classified, by circuit board package, into plural functional circuit board modules such as a "sensor module" providing the torque signal processing electric circuit board, a "control module" providing the control electric circuit board of the control drive circuit device, and a "power module" providing the drive electric circuit board of the control drive circuit device. The modules are discretely disposed in the vicinity of the reduction gear mechanism that makes up a main mechanical portion of the electric power steering device. There are cases in which some of such circuit board modules are mounted in or around the housing of the reduction gear mechanism. The discretely disposed modules are electrically interconnected by electric wirings so that they can share and perform required functions as an electric system of the electric power steering device. Such an arrangement in which the circuit modules are discretely disposed, however, increases the number of parts required and the numbers of man-hours for assembling the device itself and for mounting the assembled device on a vehicle, resulting in heavier loads on workers involved and a higher production cost.

To address the above problems, configurations in which plural circuit modules as those described above are integrally mounted inside the housing of the reduction gear mechanism of an electric power steering device have been proposed (see Japanese Laid-Open Patent Publication No. 2004-106703 and Japanese Laid-Open Patent Publication No. 2002-345211, for example).

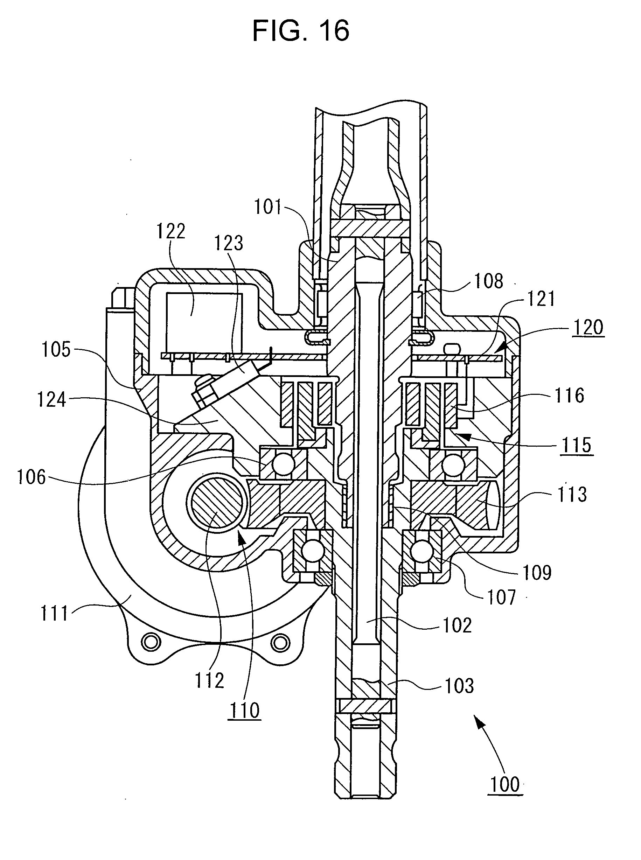

FIG. 16 is a cross-sectional view for explaining an example electric power steering device 100 having a known configuration. An input shaft 101 is, at its external end portion, linked with a steering shaft (not shown) to which a steering wheel is attached. An output shaft 103 coaxially linked to the input shaft 101 via a torsion bar 102 is disposed through a housing (hereinafter referred to as the "gear box") 105 of a reduction gear mechanism. The output shaft 103 is rotatably supported by ball bearings 106 and 107. The input shaft 101 is rotatably supported by a needle bearing 108 and a slide bearing 109.

In the gear box 105, a reduction gear mechanism 110 including a worm gear and a worm gear wheel is disposed. A worm gear shaft 112 is fittedly connected to the output shaft of an electric motor 111. A worm wheel gear 113 is fixedly press-fitted to the outer circumference of the output shaft 103. In the gear box 105, a torque sensor 115 for detecting the steering torque is disposed on the outside of the output shaft 103. The torque sensor 115 magnetically detects the relative rotation angle between the input shaft 101 and the output shaft 103 based on the amount of the torsion, caused by the steering torque, of the torsion bar 102. A detection element 116 of the torque sensor 115 is provided on the inner diameter side of the torque sensor 115.

In the gear box 105, a control module 120 is disposed. It is a control electric circuit which controls the drive output of the electric motor based on the amount of steering torque detected by the torque sensor 115 and the vehicle speed signal detected and given by a vehicle speed sensor provided on the vehicle body side. In the gear box 105, a power module 123 is disposed. It is an electric circuit for driving the electric motor and has a bridge circuit configuration including plural power transistors to be switchingly driven. The control module 120 has a circuit configuration in which a central processing unit (CPU) element and other control circuit elements 122 are mounted on a control electric circuit board 121. The detection element 116 of the torque sensor 115 is also connected to the control module 120.

The input terminal of the power module 123 is also connected to the control module 120. The power transistor bridge circuit included in the power module 123 is directly fixed to a cylindrical member 124 made of a highly heat-conductive metal. The heat generated by the power transistors switchingly and rectifyingly driving the electric motor is transmitted, via the cylindrical member 124, to the gear box 105 to be then released into the air.

To mount plural electric circuit modules including a control module and a power module altogether in the gear box of an electric power steering device, however, requires the gear box housing to be larger than otherwise required. Using a large gear box housing makes it difficult to secure space where the electric power steering device can be mounted without interfering with other devices, while also resulting in less flexibility in designing an overall layout of devices to be mounted on the vehicle. There are devices including an electric power steering device (and others, for example, a steering column with no steering assist function and an intermediate shaft) which are included in a steering mechanism system and being provided with a shock absorbing mechanism having a function of reducing the impact to a human body in case of a collision. Using a large gear box housing makes it difficult for such a shock absorbing mechanism to secure a collapsible stroke long enough to achieve shock absorption. Thus, there has been a potential problem that an electric power steering device like the above-described cannot meet basic functional requirements to be met by a device included in a steering mechanism system.

Furthermore, there has also been a potential problem with the method of releasing the heat generated in a power module. In the power module included in the control drive circuit device of a conventional electric power steering device, plural power transistors included in a bridge circuit are switchingly driven rectifying a large current, so that the amount of heat generated by the power module is much greater than that generated by other modules. It is therefore imperative that the electric steering device be provided with an internal heat radiation means. The electric power steering device 100 having a configuration in which electric parts are integrally mounted as shown in FIG. 16 uses, as heat sinks (heat radiation members), the metallic cylindrical member 124 fitted to the inner wall of the gear box 105 and the gear box 105. With the gear box used as a heat sink, however, the gear box housing is caused to thermally expand and shrink. In the reduction gear mechanism assembled in the gear box 105 and required to maintain positional accuracy, the distance between the shafts of the worm gear 112 and worm wheel gear 113 varies as the gear box housing thermally expands and shrinks. Thus, there have been potential operational problems such as that, when the clearance between the gears meshing with each other widens, rattling of the gears becomes louder and that, when the clearance between the gears meshing with each other narrows, the friction between the gears increases to degrade the operational feeling obtained when operating the electric power steering device or to shorten the lives of the gears. The present invention provides a practical electric power steering device which, having integrally mounted electrical parts, solves potential problems such as those described above.

### DISCLOSURE OF THE INVENTION

The present invention provides an electric power steering device which, having a minimum number of parts, can be easily assembled and mounted on a vehicle. In the electric power steering device, external surface portions of the gear box of a reduction gear mechanism are used as mounting faces for plural circuit modules of a control drive circuit device, enabling the reduction gear mechanism and the plural circuit modules to be integrally assembled with minimum distances among them.

Integrally mounting plural circuit modules, which are included in a control drive circuit device, on external surface portions, predetermined as mounting faces for the plural circuit modules, of the gear box of a reduction gear mechanism does not require the gear box and other structural members to be enlarged. This facilitates designing a shock absorbing mechanism which requires an adequate length of collapsible stroke for shock absorption to be secured.

Using predetermined external surface portions of the gear box of the reduction gear mechanism as mounting faces for the circuit modules included in the control drive circuit device makes it possible to design, with flexibility in terms of device shaping, an overall layout of the electric power steering device to be mounted on a vehicle and to easily prevent the electric power steering device, when being mounted on the vehicle, from interfering layoutwise with other devices and parts. This eventually makes it possible to integrate the mechanical mechanism section and electric circuit modules of the electric power steering device and to make the electric power steering device as a whole smaller.

Furthermore, fixedly mounting the circuit modules of the control drive circuit device on external surface portions, predetermined as mounting faces for the circuit modules, of the gear box of the reduction gear mechanism makes it possible to radiate the heat generated in the power module, i.e. the drive electric circuit board of the control drive circuit device and to prevent the gear box housing from thermally expanding and shrinking to change the clearance between the mutually meshing portions of the worm gear and the worm wheel gear included in the reduction gear mechanism, so that effects of variation in the clearance (for example, effects such as excessively large play between the gears meshing with each other, larger rattling, shortening of the lives of the gears, and degradation of the operational feeling obtained when operating the electric power steering device) can be prevented.

Still furthermore, integrally mounting the plural circuit modules included in the control drive circuit device on mounting faces provided in predetermined external surface portions of the gear box of the reduction gear mechanism makes it possible to interconnect the plural circuit modules using electrical wirings of minimum lengths, to connect the circuit modules and other circuit device elements using electrical wirings of minimum lengths, and to thereby reduce, to a maximum extent, the wiring loss and improve the energy consumption efficiency of the electric power steering device.

The "other circuit device elements" mentioned above include general electric parts and units included in an electric power steering device, for example, an electric motor, a field coil winding for torque detection, and a wiring frame module of a molded resin box type which has a circuit configuration arranged by partly changing the structure of a control drive circuit device and mounting, in a consolidated manner, relatively large electronic parts such as relays for cutting off a power line and electrolytic capacitors for absorbing regenerative surges. Namely, the "other circuit device elements" refer to a whole range of electric parts and units, and circuit devices included in the electric power steering device.

### BRIEF DESCRIPTION OF DRAWINGS

FIG. 1 is an external view showing a principal portion of an electric power steering device according to a first embodiment of the present invention.

FIG. 2 is an exploded perspective view of the principal portion of the electric power steering device according to the first embodiment.

FIG. 3 is a perspective view for explaining the shape of the gear box of the electric power steering device according to the first embodiment.

FIG. 4 is a perspective view for explaining the shapes of principal constituent parts, other than the gear box, of the electric power steering device according to the first embodiment.

FIG. 5 is a perspective view for explaining the configuration shown in FIG. 1 with an electric motor and covers removed.

FIG. 6 is a side view showing a first example of a terminal connection guide, for explaining positional relationships among the gear box, output terminals of a torque detection coil, a module mounting member, and the terminal connection guide.

FIG. 7 is an enlarged cross-sectional view of a portion around the terminal connection guide shown in FIG. 6.

FIG. 8 is an enlarged cross-sectional view of a portion around a second example of a terminal connection guide.

FIG. 9 is an enlarged cross-sectional view of a portion around a third example of a terminal connection guide.

FIGS. 10(a) and 10(b) are diagrams for explaining, in outline, a gear box and a module mounting member of an electric power steering device according to a second embodiment of the present invention.

FIG. 11 is an exploded perspective view of a principal portion of the electric power steering device according to the second embodiment.

FIG. 12 is a perspective view for explaining the shape of the gear box of the electric power steering device according to the second embodiment.

FIG. 13 is a perspective view for explaining the shapes of principal constituent parts, other than the gear box, of the electric power steering device according to the second embodiment.

FIG. 14 is a perspective view for explaining the gear box, attached with the principal constituent parts, of the electric power steering device according to the second embodiment.

FIGS. 15(a) and 15(b) are diagrams for explaining, in outline, a gear box and a module mounting member of an electric power steering device according to a third embodiment of the present invention.

FIG. 16 is a cross-sectional view for explaining an example of a conventional electric power steering device.

### DESCRIPTION OF THE PREFERRED EMBODIMENTS

### FIRST EMBODIMENT

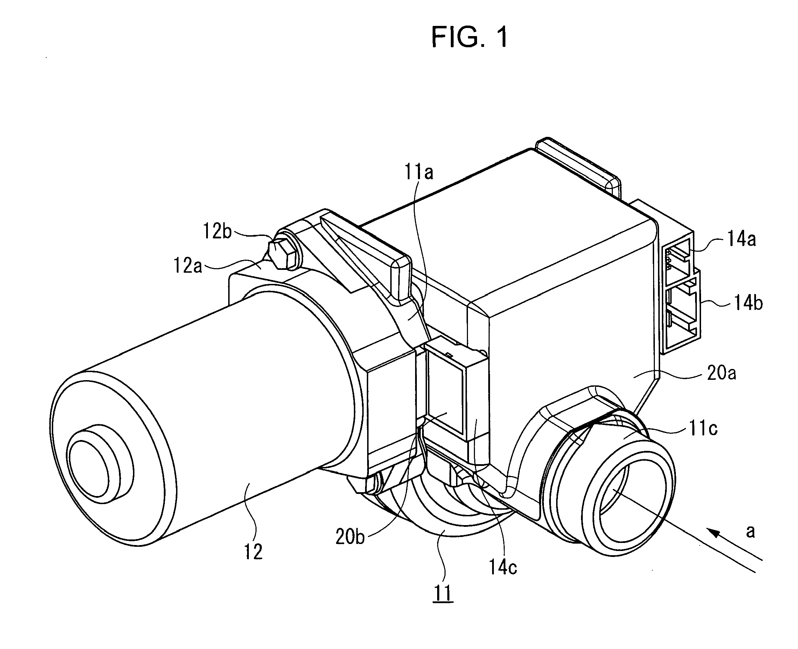

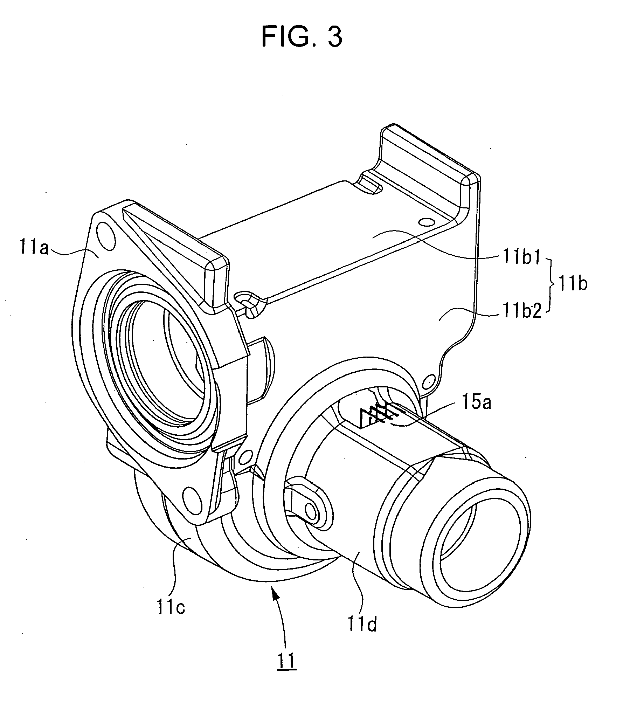

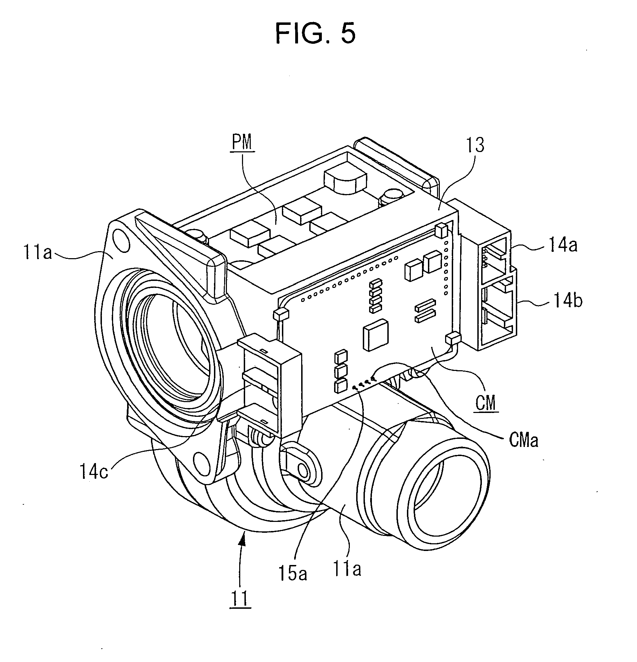

A first embodiment of the present invention will be described below. FIGS. 1 to 5 are diagrams for explaining the configuration of the electric power steering device according to the first embodiment.

Referring to FIGS. 1 to 5, reference numeral 11 denotes a gear box of the electric power steering device, and reference numeral 12 denotes an electric motor. In the gear box 11 of the electric power steering device, a reduction gear mechanism is disposed. The reduction gear mechanism includes an input shaft coupled to a steering wheel, a torsion bar, an output shaft, ball bearings, a slide bearing, a worm gear, and a worm wheel gear which are assembled in a configuration similar to a known one shown in FIG. 16. These parts are not shown in FIGS. 1 to 5. Arrow a in FIG. 1 denotes the input shaft to output shaft direction. These parts may be assembled in other than the known configuration shown in FIG. 16.

The known configuration shown in FIG. 16, for example, is of a column assist type electric power steering device. As for the electric power steering device, i.e. the object of claims, that, as cited above, "assists a driver in steering operation in terms of the rotary torque generated on the steering shaft linked between the steering wheel and the pinion shaft of the rack and pinion steering mechanism of a vehicle," the assist mechanism provided on the pinion shaft of the rack and pinion mechanism included in the pinion assist type electric power steering device is included in a configuration other than the known configuration.

The claimed configuration shown in FIG. 1 and subsequent diagrams will be further described below.

A flange 12a of the electric motor 12 is fixedly clamped to a motor flange 11a of the gear box 11 by a bolt 12b. The output shaft of the electric motor 12 is fittedly coupled to the axial end of the worm gear (not shown) assembled in a rectangular parallelepiped box 11b of the gear box 11.

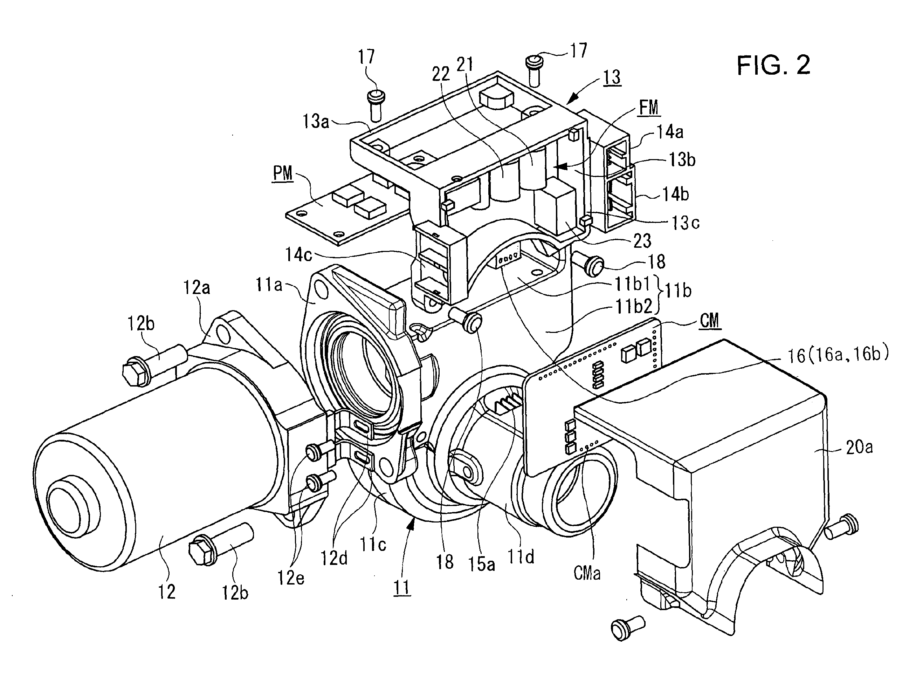

With reference to FIGS. 2 to 4, configurations and arrangements of individual parts will be described. The gear box 11 integrally includes the rectangular parallelepiped box 11b accommodating the worm gear, a flat cylindrical housing portion 11c accommodating the worm wheel gear, and a cylindrical portion 11d accommodating a torque sensor.

The rectangular parallelepiped box 11b has a first flat face 11b1 and a second flat face 11b2. The first flat face 11b1 is formed on an external surface of the rectangular parallelepiped box 11b, the external surface being, as viewed from the meshing point between the worm gear and the worm wheel gear, outside (or on the other side) of the axis extending through the worm gear shaft and the center shaft of the electric motor fitted to the worm gear shaft. The second flat face 11b2 is formed on an external surface of the rectangular parallelepiped box 11b, the external surface perpendicularly meeting the first flat face 11b1 and being disposed toward the input shaft. The second flat face 11b2 is arranged to be the closest face to the output terminals of a torque detection coil 15 for torque detection included in the torque sensor provided on the outer circumference of the input shaft. When the gear box 11 is externally viewed in the direction of the axis extending through the worm gear shaft and the rotary center shaft of the electric motor, from either the left or right side of the gear box 11, the first flat face 11b1 and the second flat face 11b2 appear adjacent to each other in an L shape. These flat faces are used to integrally mount the plural circuit modules being described later.

The first flat face 11b1 is, as viewed from the meshing point between the worm gear and the worm wheel gear, outside (or on the other side) of the axis of the rotary center shaft of the electric motor while, among plural flat faces intersecting the plane including the gear meshing point and the axis of the motor shaft, being the farthest one from the gear meshing point.

The output terminals 15a of the torque detection coil 15 of the torque sensor are exposed at a location close to the second flat face 11b2 of the cylindrical portion 11d. The output terminals 15a of the torque detection coil 15 are formed approximately perpendicularly to the second flat face 11b2. The output terminals 15a of the torque detection coil 15 have end portions extending in a direction away from the second flat face 11b2.

A module mounting member 13 is an L-shaped synthetic resin member which is attached to oppose the two flat faces, i.e. the first and second flat faces 11b1 and 11b2 of the gear box 11. A frame module FM, which is a circuit module, includes a power supply circuit and other circuit elements mounted on the module mounting member 13. Two other circuit modules are also mounted on the module mounting member 13. One of them is a power module PM including a power circuit which includes a switching transistor and which is used to drive the electric motor. The other of them is a control module CM including a control circuit and a torque detection circuit.

The face, to oppose the first flat face 11b1 of the gear box 11, of the module mounting member 13 is formed in a rectangular frame body 13a. The rectangular frame body 13a functions as a pressing member when fitting the power module PM to the first flat face 11b1 of the gear box 11. The rectangular frame body 13a is placed on the top side of the power module PM and fixed to the first flat face 11b1 of the gear box 11 with screws 17.

With the lower side of the power module PM fixedly put in contact with the first flat face 11b1 of the gear box 11, the gear box 11 functions as a heat sink. The heat generated in the power module PM is transmitted to the gear box 11 to be then radiated. In this configuration, no heat source is disposed between the shafts in the reduction gear mechanism, so that, even if the gear box thermally expands, the distances between the shafts in the reduction gear mechanism are not much affected.

The face, to oppose the second flat face 11b2 of the gear box 11, of the module mounting member 13 is formed in a rectangular frame body 13b. Capacitors 21 and 22 and a relay 23 which are among the power supply circuit and other circuit elements are attached to the rectangular frame body 13b. The open side of the rectangular frame body 13b makes up a mounting part 13c for the control module CM.

The module mounting member 13 is provided with a signal line connector 14a to which a control communication signal line is connected, a power supply connector 14b to which a mobile power supply (for example, a battery) is connected, and a motor terminal connector 14c to which a motor terminal is connected.

The power module PM, control module CM and frame module FM are provided with terminals for mutual connections and terminals or through holes for connecting other circuit elements. Fitting the circuit modules to the module mounting member 13 and attaching the module mounting member 13 to the gear box 11 completes the connections between the circuit modules and between the circuit modules and other circuit elements. The connections to be made to the signal line connector 14a, power supply connector 14b, and motor terminal connector 14c are also completed at the same time. No wirings other than the power supply line and the control communication signal line to be connected to an external device are exposed outside the circuit modules. Thus, a device configuration capable of shielding the device against disturbing radio noise radiation and inhibiting the device from being affected by such noise radiation can be realized.

An assembly process for the electric power steering device will be described below. It is assumed that a reduction gear mechanism including a steering shaft, an input shaft, a torsion bar, an output shaft, ball bearings, a needle bearing, a slide bearing, a worm gear, and a worm wheel gear which are arranged similarly to the known configuration shown in FIG. 16 has been assembled in the gear box 11.

First, the frame module FM is disposed such that the power module PM is placed over the first flat face 11b1 of the gear box 11 and such that the rectangular frame body 13a is placed over the power module PM. The frame module FM is fixed to the gear box 11 with the screws 17 such that the power module PM is held between the frame module FM and the gear box 11. This electrically connects terminals of the power module PM and terminals of the frame module FM.

When performing the above step, applying a heat radiating agent, for example, silicone grease for heat radiation to the first flat face 11b1 of the gear box 11 will allow the heat generated in the power module PM to be transmitted to the gear box 11 with improved efficiency.

Next, the control module CM is fitted to the mounting part 13c of the module mounting member 13 and fixed with screws 18 to the second flat face 11b2 of the gear box 11. This electrically connects the control signal terminal of the control module CM and the control signal terminal of the frame module FM. The output terminals 15a, exposed from the cylindrical portion 11d of the gear box 11, of the torque detection coil 15 of the torque sensor are also electrically connected to terminals of the control module CM at the same time. Soldering, fuse welding, and connector joining are carried out as required between the modules.

The electric motor 12 is fixed to the motor flange 11a of the gear box 11 with screws 12b. The output shaft of the electric motor 12 is coupled to the worm gear shaft in the gear box 11. Power feed terminals 12d of the electric motor 12 are fixed to the motor terminal connector 14c of the frame module FM with screws 12e.

A cover 20a is attached to the control module CM from the outside. A cover 20b is attached to the motor terminal connector 14c. This completes the assembly process.

Next, a terminal connection guide which makes connections between the circuit modules easy will be described.

By way of example, the connection structure between the control module CM and the output terminals 15a of the torque detection coil 15 will be described.

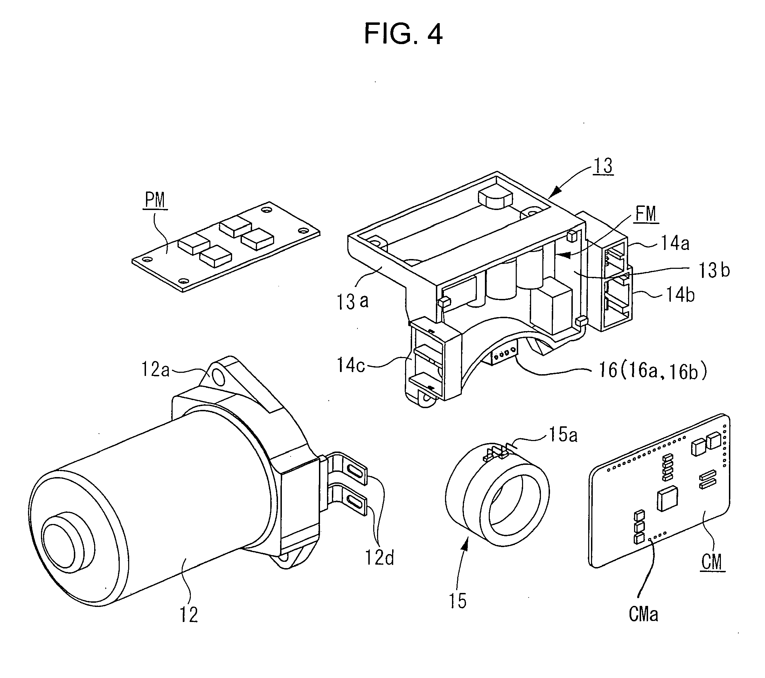

Referring to FIGS. 2 and 4, a terminal connection guide 16 which guides the output terminals 15a of the torque detection coil 15 is formed integrally with the rectangular frame body 13b of the module mounting member 13. The terminal connection guide 16 is a guide member for enabling, in the assembly process, the output terminals 15a of the torque detection coil 15 to be easily inserted through through-holes CMa formed in the control module CM. It is useful when the output terminals 15a of the torque detection coil 15 and the control module CM are not very accurately positioned. The terminal connection guide 16 is not an indispensable part. It need not be provided when not required, for example, as a result of improving relevant parts in terms of dimensional accuracy for assembly or devising an improved assembly procedure or improved assembly jig.

In the module mounting member 13, the terminal connection guide 16 and the frame body 13b are integrally formed. The output terminals 15a of the torque detection coil 15 are exposed at a location, close to the second flat face 11b2, of the cylindrical portion 11d of the gear box 11. In the control module CM, the through holes CMa for electrically connecting circuits included in the control module and the output terminals 15a of the torque detection coil 15 are formed.

There are plural examples of the terminal connection guide 16. They will be described one by one below.

### [First example of terminal connection guide]

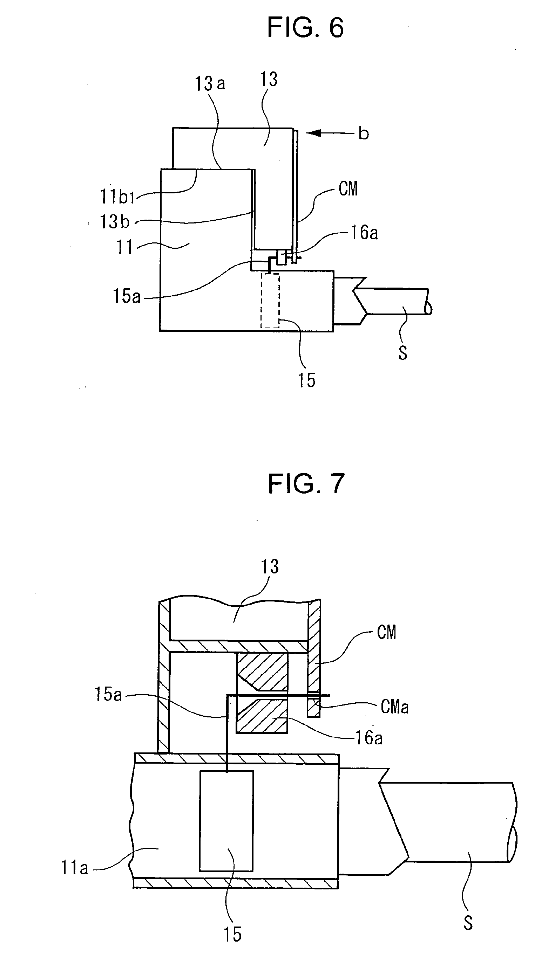

A first example of the terminal connection guide is shown in FIGS. 6 and 7. FIG. 6 is a side view showing positional relationships among the gear box 11, the output terminals 15a of the torque detection coil 15, the module mounting member 13, and a terminal connection guide 16a. FIG. 7 is an enlarged cross-sectional view of a portion around the terminal connection guide 16a. In FIGS. 6 and 7, symbol S denotes the input shaft.

The rectangular frame body 13a of the module mounting member is moved in the direction of arrow b shown in FIG. 6 and thereby fitted to the first flat face 11b1 of the gear box 11. The relevant parts are arranged so that, when this step is performed, the output terminals 15a of the torque detection coil 15 are inserted first through the terminal connection guide 16a and then through the through holes CMa of the control module CM.

The through holes, through which the output terminals 15a are inserted, formed in the terminal connection guide 16a are each conically or approximately conically shaped having an inlet diameter adequately larger than the outer diameter of the output terminals 15a, the diameter of each of the through holes growing smaller toward its outer end. The diameter of each of the through holes at its outer end is only slightly larger than the outer diameter of the output terminals 15a while being smaller than the diameter of the through holes CMa formed in the circuit board of the control module CM.

The module mounting member 13 is moved in the direction of arrow b shown in FIG. 6 and thereby fitted to the first flat face 11b1 of the gear box 11. When this step is performed, the output terminals 15a of the torque detection coil 15 are guided into the conical through holes formed in the terminal connection guide 16a to be correctly positioned for insertion through the through holes CMa formed in the circuit board of the control module CM.

In the above configuration, even if the output terminals 15a of the torque detection coil 15 are somewhat shifted or bent, they are correctly positioned when inserted through the conical through holes formed in the terminal connection guide 16a. The control module CM and the torque detection coil 15 can therefore be connected with ease.

### [Second example of the terminal connection guide]

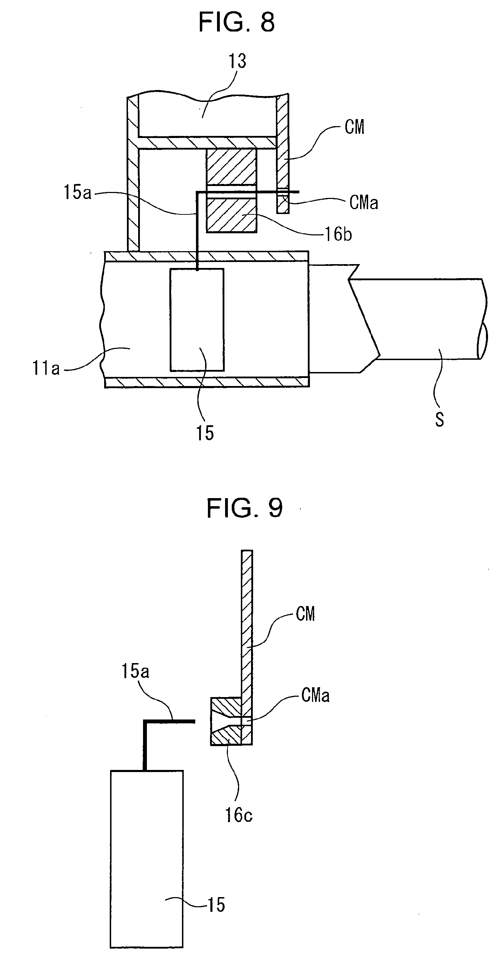

A second example of the terminal connection guide is shown in FIG. 8. FIG. 8, which corresponds to FIG. 7 showing the first example of the terminal connection guide, is an enlarged cross-sectional view of a portion around a terminal connection guide 16b.

Each of the through holes, through which the output terminals 15a are inserted, formed in the terminal connection guide 16b has an approximately uniform diameter which is slightly larger than the outer diameter of the output terminals 15a while being smaller than the diameter of the through holes CMa formed in the circuit board of the control module CM.

The magnitude of shifting or bending of the output terminals 15a of the torque detection coil 15 that can be corrected by the terminal connection guide 16b is smaller than correctable by the terminal connection guide 16a. Still, the terminal connection guide 16b can make it possible, where the relevant parts are accurately formed, to accurately and easily connect the control module CM and the torque detection coil 15.

### [Third example of the terminal connection guide]

A third example of the terminal connection guide is shown in FIG. 9. FIG. 9, which corresponds to FIG. 7 showing the configuration of the first example, is an enlarged cross-sectional view of a portion around a terminal connection guide 16c.

In the third example, unlike in the first and second examples, the terminal connection guide 16c is disposed on the through holes CMa formed in the control module CM. The through holes, through which the output terminals are inserted, of the terminal connection guide 16c are shaped the same as the through holes formed in the terminal connection guide 16a.

This example, like the first example of the terminal connection guide, makes it possible, even if the output terminals 15a of the torque detection coil 15 are somewhat shifted or bent, to connect the control module CM and the torque detection coil 15 with ease.

The third example of the terminal connection guide can be used even in cases where the module mounting member 13 can be provided with no terminal connection guide, for example, on account of a layout problem.

The terminal connection guide is not limited to the above examples. The terminal connection guide may be disposed on the gear box, a frame body on which a circuit module is mounted, a circuit module board, or a circuit element such that the through holes formed in the terminal connection guide are positioned to face the connection terminals of the circuit module or circuit element. The terminal connection guide can then be used for connections between the circuit module and another circuit module or between the circuit element and another circuit element.

### SECOND EMBODIMENT

The electric power steering device according to a second embodiment of the present invention will be described below. The electric power steering device of the second embodiment differs from the electric power steering device of the first embodiment in the shapes of the gear box and the module mounting member. As for other constituent parts, the electric power steering device of the second embodiment is the same as the electric power steering device of the first embodiment. In the following, the second embodiment will be described only as to its aspects differing from the first embodiment. Also, parts the same as those used in the first embodiment will be referred to by the same reference numerals as used for the first embodiment, and their description will be omitted.

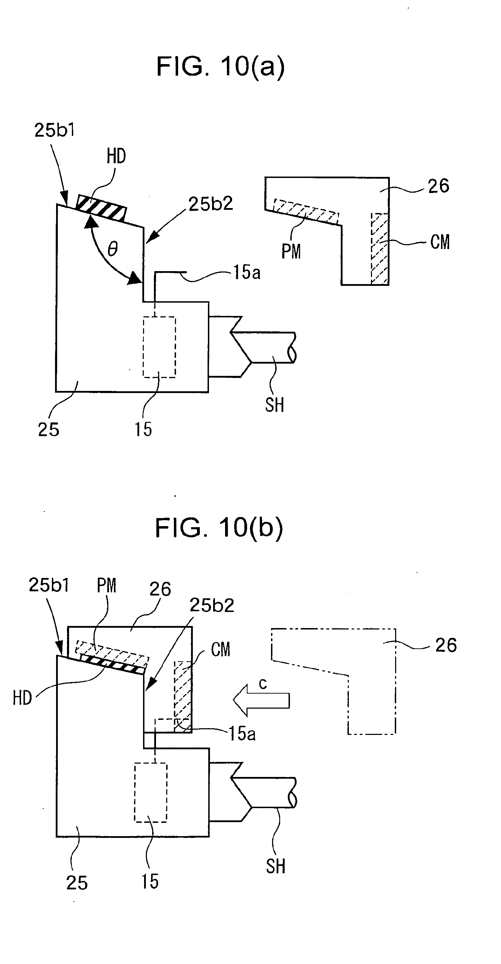

FIGS. 10(a) and 10(b) are diagrams for explaining, in outline, a gear box 25 and a module mounting member 26 of the electric power steering device of the second embodiment.
FIG. 10(a) shows the gear box 25 and the module mounting member 26 in a state where they are not yet fitted together. FIG. 10(b) shows the gear box 25 and module mounting member 26 in a state where they have been fitted together.

The gear box 25 of the second embodiment differs from the gear box 11 of the first embodiment in the inclination angle of the first flat face. The second flat face of the gear box 25 of the second embodiment is the same as the second flat face 11b2 of the gear box 11 of the first embodiment. In the first embodiment, the first flat face 11b1 of the gear box 11 is approximately perpendicular to the second flat face 11b2. In the second embodiment, the first flat face 25b1 of the gear box 25 meets the second flat face 25b2 at an angle θ which exceeds 90 degrees. The module mounting member 26 of the second embodiment is formed to fit the angle formed between the first flat face 25b1 and the second flat face 25b2 of the gear box 25.

The module mounting member 26 makes up the frame module FM including a power supply circuit and other circuit elements. The power module PM is mounted on the face that opposes the first flat face 25b1. The control module CM is mounted on the face that opposes the second flat face 25b2 . In these regards, the second embodiment is the same as the first embodiment.

Applying a heat radiating agent HD to the first flat face 25b1 is effective in enhancing the radiation of the heat generated in the power module PM. In the first embodiment, the module mounting member 13 to be mounted is moved to over the first flat face 11b1 in a direction along the first flat face 11b1, with the end portions of the output terminals 15a of the detection coil 15 directionally controlled for insertion through the through holes CMa formed in the control module CM. Therefore, when the module mounting member 13 is moved over the first flat face 11b1, the heat radiating agent HD is wiped off or pushed away by an edge portion of the first flat face 11bl. This makes the application of the heat radiating agent HD less effective. In the configuration of the second embodiment, the module mounting member 26 can be fitted to the first flat face 25b1 by moving it in a diagonal direction, so that the heat radiating agent HD is prevented from being wiped off or pushed away.

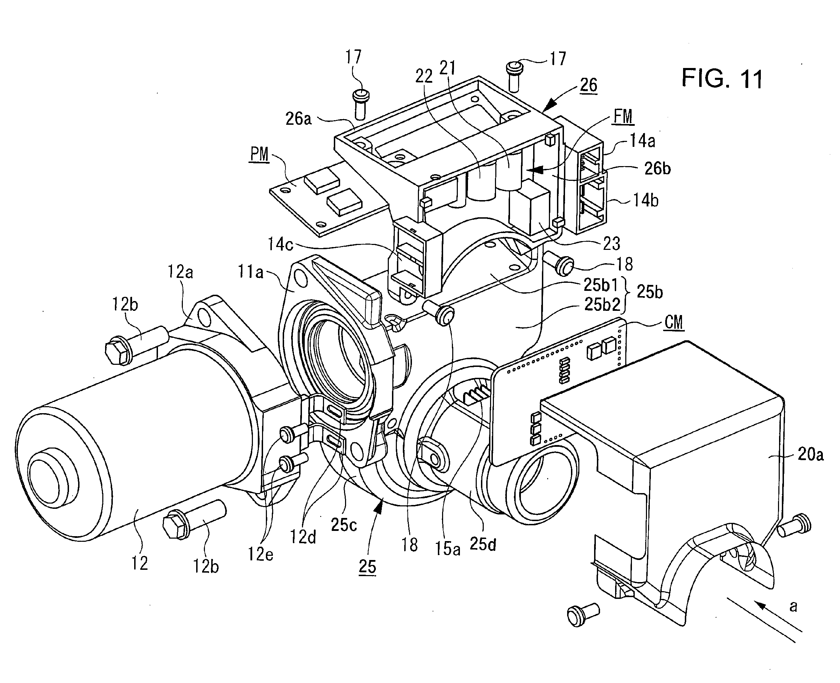

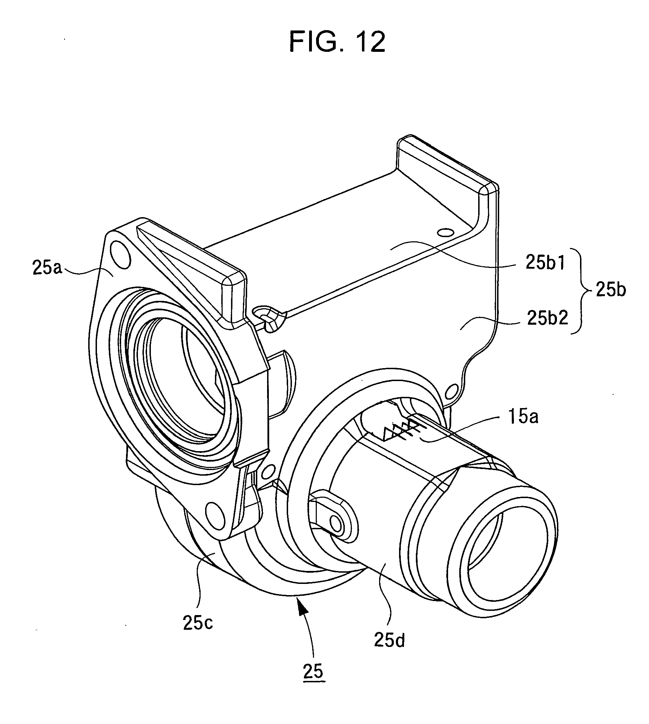

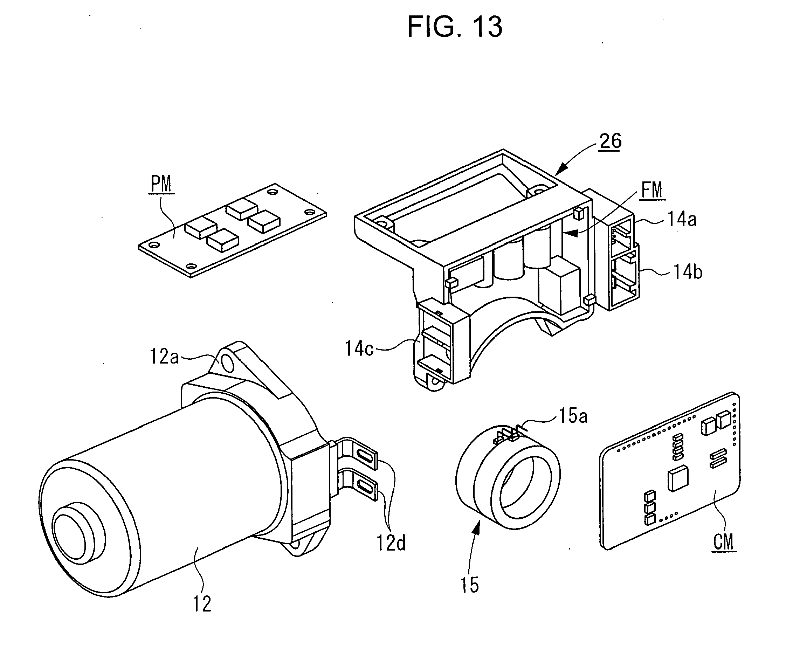

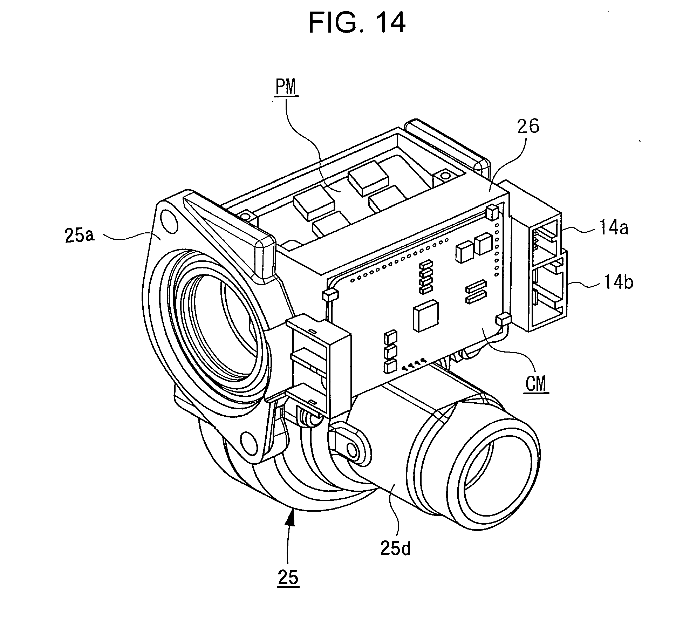

FIG. 11 is a perspective view of a principal portion in a disassembled state of the electric power steering device according to the second embodiment. FIG. 12 is a perspective view for explaining the shape of the gear box 25. FIG. 13 is a perspective view for explaining the shapes of principal constituent parts other than the gear box. FIG. 14 is a perspective view for explaining the gear box fitted with principal constituent parts.

A reduction gear mechanism and other constituent parts are arranged similarly to the known configuration shown in FIG. 16, the reduction gear mechanism including a steering shaft, an input shaft, a torsion bar, an output shaft, ball bearings, a needle bearing, a slide bearing, a worm gear, and a worm wheel gear. Like in the case of FIGS. 1 to 5, such constituent parts are omitted in FIGS. 11 to 14, too. Arrow a in FIG. 11 denotes the input shaft to output shaft direction. A known configuration other than the one shown in FIG. 16 may also be used. Even though the second embodiment has been described based on an example in which no terminal connection guide is used, using a terminal connection guide will make assembling the electric power steering device easier. In other respects than described above, the configuration of the second embodiment is the same as that of the first embodiment, so that it will not be described further.

### THIRD EMBODIMENT

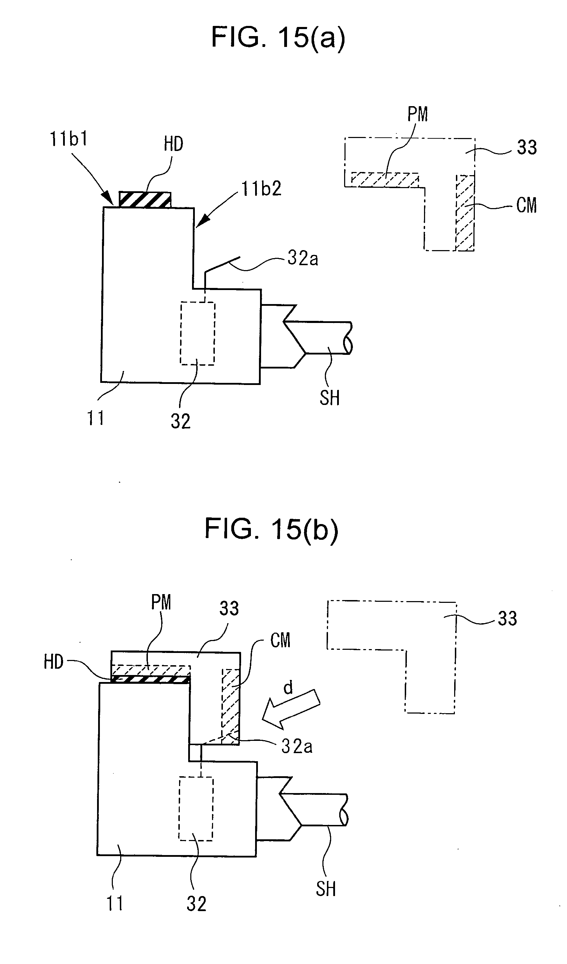

The electric power steering device according to a third embodiment of the present invention will be described below. FIGS. 15(a) and 15(b) are diagrams for explaining, in outline, a gear box 11 and a module mounting member 33 of the electric power steering device of the third embodiment. FIG. 15(a) shows the gear box 11 and the module mounting member 33 in a state where they are not yet fitted together. FIG. 15(b) shows them in a state where they have been fitted together.

The third embodiment differs from the first embodiment in the inclination angle of the output terminals of the torque detection coil included in the torque sensor and the inclination angle of the through holes formed in the control module.

In the first embodiment, the output terminals 15a of the torque detection coil 15 of the torque sensor are formed approximately perpendicularly to the second flat face 11b2 of the gear box 11. Also, the front portions of the output terminals 15a of the torque detection coil 15 extend in a direction away from the second flat face 11b2. In the third embodiment, the front portions of the output terminals 32a of the torque detection coil 32 extend in a direction diagonally away from the input shaft SH. Namely, the direction in which they extend is the only difference between the output terminals 15a of the first embodiment and the output terminals 32a of the third embodiment.

In the third embodiment, the through holes formed in the control module are inclined so as to agree with the inclination of the output terminals 32a. Alternatively, the through holes may be formed in the control module with a larger diameter than that of the through holes formed in the control module of the first embodiment so as to allow the output terminals 32a to be inserted through them. Even though the third embodiment has been described based on an example in which no terminal connection guide is used, using a terminal connection guide will make assembling the electric power steering device easier.

The module mounting member 33 makes up the frame module FM including a power supply circuit and other circuit elements. The power module PM is mounted on the face that opposes the first flat face 11b1 of the gear box. The control module CM is mounted on the face opposing the second flat face 11b2. In these regards, the third embodiment is configured the same as the first and second embodiments.

Applying a heat radiating agent HD to the first flat face 11b1 is effective in enhancing the radiation of the heat generated in the power module PM. In the configuration of the third embodiment, like in the second embodiment, the module mounting member 33 can be fitted to the first flat face 11b1 by moving it in a diagonal direction, so that the heat radiating agent HD is prevented from being wiped off or pushed away.

In other respects than described above, the configuration of the third embodiment is the same as that of the first embodiment, so that it will not be described further.

### INDUSTRIAL APPLICABILITY

The present invention provides an electric power steering device for vehicle, in which circuit board modules including electric circuit devices for steering assist control and assist force generation are mounted on external surfaces of the gear box of a reduction gear mechanism of the steering device.

## Claims

1. An electric power steering device, comprising:
a gear box which rotatably supports an input shaft linked to a steering shaft and an output shaft linked to a steering mechanism and which externally has a first flat face and a second flat face meeting the first flat face,
a speed reduction mechanism which is accommodated in the gear box and which transmits rotation of an electric motor to the output shaft, the electric motor providing a steering assist force based on a steering torque generated in the steering shaft,
a torque sensor which is accommodated in the gear box and which detects a steering torque by detecting a torsion angle between the input shaft and the output shaft, and
a control device which controls at least a motor current of the electric motor, **characterized in that**:
said control device comprises a plurality of circuit modules, and the circuit modules are mounted on the first flat face and the second flat face of the gear box.

2. The electric power steering device according to claim 1, said speed reduction mechanism accommodated in the gear box is a reduction gear mechanism; the first flat face of the gear box is outside an axis of a center shaft of the electric motor as viewed from a gear meshing point of the reduction gear mechanism; and the second flat face meets the first flat face.

3. The electric power steering device according to claim 1, said speed reduction mechanism accommodated in the gear box is a reduction gear mechanism; the first flat face of the gear box is outside an axis of a center shaft of the electric motor as viewed from a gear meshing point of the reduction gear mechanism and intersects a plane including the gear meshing point and the axis of the center shaft of the electric motor; and the second flat face meets the first flat face.

4. The electric power steering device according to claim 1, said speed reduction mechanism accommodated in the gear box is a reduction gear mechanism including a worm gear and a worm wheel gear; the first flat face of the gear box is outside an axis of a worm gear shaft as viewed from a gear meshing point of the reduction gear mechanism; and the second flat face meets the first flat face.

5. The electric power steering device according to claim 1, said speed reduction mechanism accommodated in the gear box is a reduction gear mechanism; the first flat face of the gear box is outside an axis of a center shaft of the electric motor as viewed from a gear meshing point of the reduction gear mechanism, the first flat face being a flat face farthest from the gear meshing point; and the second flat face meets the first flat face.

6. The electric power steering device according to claim 1, said speed reduction mechanism accommodated in the gear box is a reduction gear mechanism; the first flat face of the gear box is outside an axis of a center shaft of the electric motor as viewed from a gear meshing point of the reduction gear mechanism, the first flat face being a flat face which intersects a plane including the gear meshing point and the axis of the center shaft of the electric motor and which is farthest from the gear meshing point; and the second flat face meets the first flat face.

7. The electric power steering device according to claim 1, said plurality of circuit modules of the control device include a control module including a control circuit, a power module including a power circuit for driving the electric motor, and a frame module including other circuit parts; the power module is fitted to the first flat face of the gear box; and the other circuit parts included in the frame module and the control module are fitted to the second flat face of the gear box.

8. The electric power steering device according to claim 1, said torque sensor have a plurality of output terminals which end portion exposed from the gear box, in a direction away from the second flat face of the gear box to be connected to the control module of the control device, the direction being approximately perpendicular to the second flat face.

9. The electric power steering device according to claim 7, said circuit modules of the control device are assembled to a frame body having faces opposing the first and second flat faces of the gear box such that signal terminals and power feed terminals of the circuit modules are interconnected on the frame body.

10. The electric power steering device according to claim 7, said power module is fitted to the first flat face of the gear box with a heat radiating agent interposed between them.

11. The electric power steering device according to claim 7, said circuit modules of the control device have no externally exposed wiring other than a power feed line and a control signal line to be connected to an external device.

12. The electric power steering device according to claim 1, said second flat face of the gear box is approximately perpendicular to the input shaft and meets the first flat face at an angle exceeding 90 degrees.

13. The electric power steering device according to claim 12, said circuit modules of the control device include a control module including a control circuit, a power module including a power circuit for driving the electric motor, and a frame module including other circuit parts; the power module is fitted to the first flat face of the gear box; and the other circuit parts included in the frame module and the control module are fitted to the second flat face of the gear box.

14. The electric power steering device according to claim 13, wherein said power module is fitted to the first flat face of the gear box with a heat radiating agent interposed between them.

15. The electric power steering device according to claim 1, wherein said torque sensor has an output terminal which is disposed along a plane in which the input shaft lies and an end portion of which extends in a direction diagonally away from the input shaft.

16. The electric power steering device according to claim 1, wherein connections between the circuit modules of the control device or between the circuit modules and other circuit elements are made via a terminal connection guide.

17. The electric power steering device according to claim 16, wherein the terminal connection guide has a through hole, through which a terminal is inserted, the through hole having a conically or approximately conically curved surface and a diameter growing smaller from an inlet thereof toward an outlet thereof, the diameter being, at a smallest portion of the through hole, slightly larger than an outer diameter of the terminal.

18. The electric power steering device according to claim 16, wherein the terminal connection guide is disposed on the gear box, a frame body on which a circuit module is mounted, a circuit module board, or a circuit element such that a through hole provided in the terminal connection guide is positioned to face a connection terminal of the circuit module or circuit element.

19. The electric power steering device according to claim 16, wherein the terminal connection guide is made of an electrically insulating material.
